# EUROPEAN PATENT APPLICATION

(11) **EP 2 792 285 A1**
(43) Date of publication of application: **22.10.2014**
(21) Application number: 14165100.0
(22) Date of filing: 17.04.2014
(51) Int. Cl.: A47J 47/04, A47G 19/24, B65D 83/06, B65D 47/26

(54) **Selective distributing device with warranty seal**

(30) Priority: 19.04.2013 IT MI20130645
(71) Applicant: Tecnostampi S.r.l., 36014 Santorso (VI) (IT)
(72) Inventor: Bonato, Roberto, 36033 Isola Vicentina (VI) (IT)
(74) Representative: Martini, Gabriele

(57) **Abstract**

A device (10) for selectively distributing a substance contained in a container (30) of the type switchable between a first non-distribution configuration, a second lesser distribution configuration and at least one third greater distribution configuration; said selective distributing device (10) being of the type comprising:
- a cap element (11) which is associable with a container and provided with a lesser distribution area (12), at least one greater distribution area (13, 14) and a non-distribution area (15);
- a selector element (16) provided with a slit (17) and moveably constrained above said cap element (11) between a non-distribution position, wherein said slit (17) is superimposed with respect to said non-distribution area (15), a lesser distribution position, wherein said slit (17) is superimposed with respect to said lesser distribution area (12), and at least one greater distribution position wherein said slit (17) is superimposed with respect to said at least one greater distribution area (13, 14);
- a warranty seal (18) for preventing the distribution before the first distribution;

wherein said warranty seal (18) is of the breakable type and configured to lock said selector in said non-distribution position when intact and remain integral with said cap element (11) or said selector element (16) when broken.

## Description

The present invention refers to a selective distributing device.

In particular the present invention refers to a selective distributing device provided with a warranty seal capable of clearly signalling that the device has or has not been used at least once.

The term selective distributing is used to indicate the fact that different types of distributing can be provided so that, performing the same actions, a greater or smaller amount of the product can be distributed.

This field of application of the invention can be encompassed in the field of distributing food substances in sandy or granular form such as salt, pepper, spices in general and much more.

More in detail in the extreme variability of the currently known selective distributing devices, the present invention refers to a particular type thereof comprising:
- a cap element, which is associable with a container and provided with a lesser distribution area, at least one greater distribution area and a non-distribution area; and
- a selector element provided with a slit and moveably constrained above the cap element.

Acting on such selector element allows to switch the device in various configurations such as:
- a non-distribution configuration, wherein the slit of the selector is superimposed with respect to the non-distribution area;
- a lesser distribution configuration, wherein the slit of the selector is superimposed with respect to the lesser distribution area; and
- a greater distribution configuration, wherein the slit of the selector is superimposed with respect to the greater distribution area.

The cap is usually cylindrically shaped with a lateral wall for coupling to the container, an open base arranged inside the container, and a closed base facing outward having the aforementioned openings.

The selector is in form of a disc rotatably constrained above the perforated closed base of the cap.

As known up to date, lesser distribution area and greater distribution area differ with respect to each other due to the presence of openings with more or less large sections.

Two different warranty sealings are associated with such type of selective distributing devices.

The first type provides a removable barrier element which obstructs at least one distributing opening, while the second type provides an element with a label to be removed which covers the selector at least at the slit.

Generally, today all warranty seals provided on the known selective distributing devices of the described type with rotatable selector provide for the presence of an element to be removed and separated from the device before the first distributing.

Such procedure implies the disadvantage of requiring a further disposal of the removed seal, the disposal also potentially having an impact on the economy of the product.

In addition, the analogous known devices are made of various pieces.

Starting from such known technique the object of the present invention is to make a selective distributing device provided with a warranty seal that is an alternative to the known ones, particularly efficient and obtainable in a single piece by moulding. Generally, the present invention proposes the solution of providing a warranty seal of the breakable type and configured to lock the selector in a non-distribution position when intact and remain integral with respect to the cap element or the selector element when broken. Thus, according to the present invention there is no element to be removed, and disposed separately before performing the first distributing.

As a preferred form of such warranty seal there is at least one breakable bridge element for the peripheral connection between the cap element and the selector element.

In addition, such solution offers the advantage of being able to make the device in a single piece facilitating the moulding steps.

Further characteristics of the invention shall be outlined by the dependent claims with reference to the preferred embodiment shown in the figures.

The characteristics and advantages of a selective distributing device provided with a warranty seal according to the present invention shall be more apparent from the following exemplifying and nonlimiting description with reference to the attached schematic drawings wherein:
- figure 1 is a view of the device according to the invention obtained by moulding in a single piece; and
- figure 2 is the sectional view of the device of figure 1 along the line of section II-II; and
- figure 3 is a sectional view of the device of the present invention associated with the container.

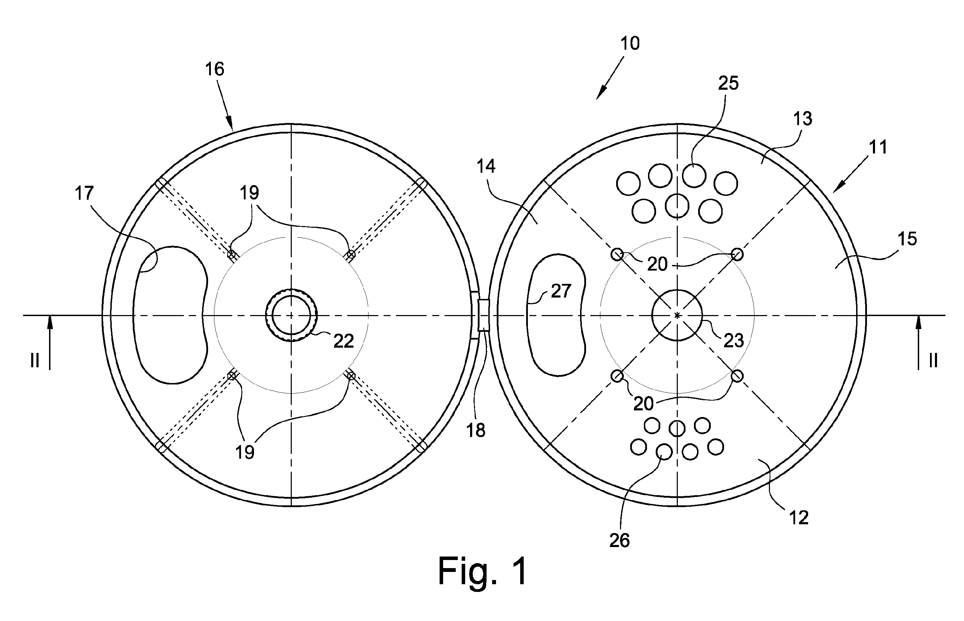

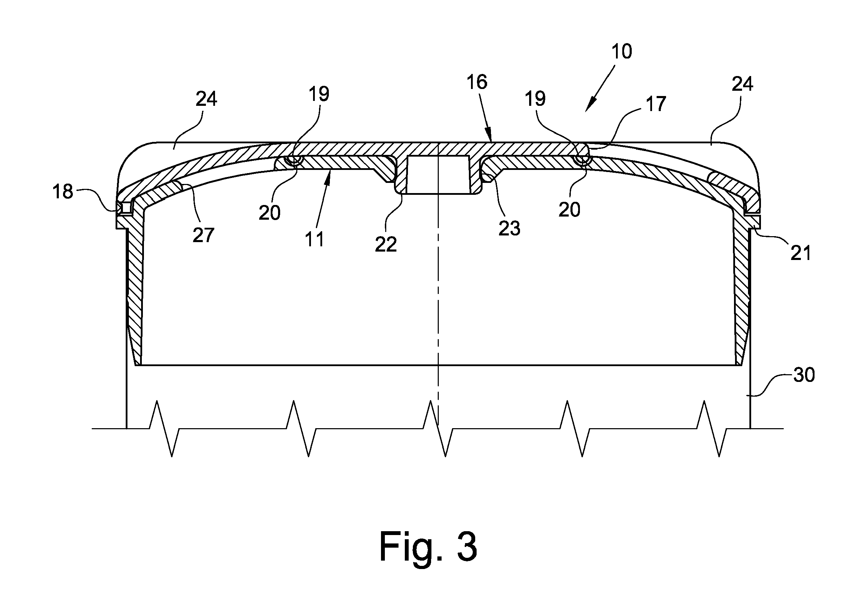

With reference to figures 1-3, a selective distributing device provided with a warranty seal according to the present invention is shown with 10.

Such selective distributing device 10 can be associated with a container 30 and it is of the type switchable between a first non-distribution configuration, a second configuration for a lesser distribution and at least one third configuration for a greater distribution.

The selective distributing device 10 comprises:
- a cap element 11 which can be associated with a container and provided with a lesser distribution area 12, at least one greater distribution area 13, 14 and a non-distribution area 15;
- a selector element 16 provided with a slit 17 and moveably constrained above the cap element 11 between a non-distribution position, wherein the slit 17 is superimposed with respect to the non-distribution area 15, a lesser distribution position, wherein the slit 17 is superimposed with respect to the lesser distribution area 12, and at least one greater distribution position wherein the slit 17 is superimposed with respect to the at least one greater distribution area 13, 14; and
- a warranty seal 18 for preventing the distribution before the first distribution.

In particular according to the present invention the warranty seal 18 of the breakable type is configured so as to lock the selector in a non-distribution position when intact and remain integral with respect to the cap element 11 or the selector element 16 when broken. Thus, it is not necessary to provide for separate disposals of the seal and the device, the seal always remaining associated with the cap 11 or the selector 16.

Such warranty seal 18 is preferably in form of at least one breakable bridge element for peripheral connection between the cap element 11 and the selector element 16. Such solution offers the further advantage of being able to mould the device in a single piece as shown in figure 1.

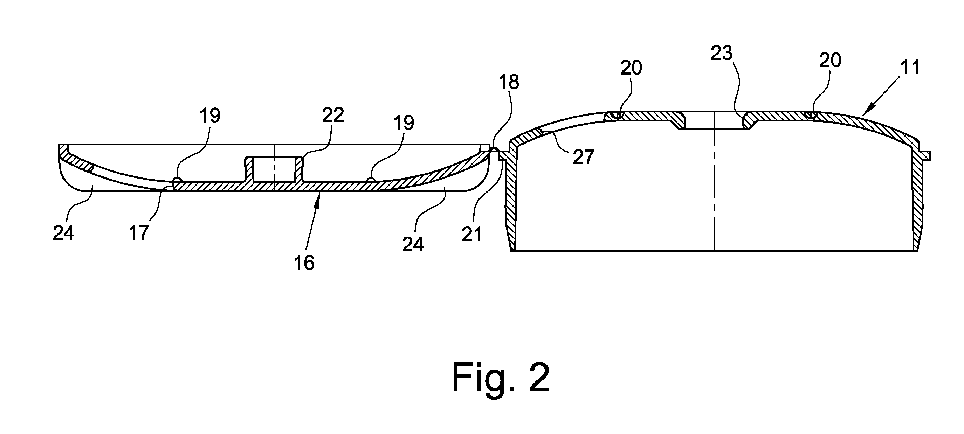

As shown in figure 2 the bridge element 18 is on one side directly connected to the periphery of the selector element 16 and on the other side to an annular protrusion 21 obtained laterally to the cap element 11. Preferably a portion may be provided with a small section or a notch at the connection between the annular protrusion 21 and bridge 18 so as to actually allow the bridge 18 to remain associated with the selector 16 even after the opening.

According to what is shown, the selector element 16 is rotatably movable with respect to the cap element 11 when the bridge element 18 is broken.

Such rotation may occur with respect to the centre of the cap or around another decentred point.

For example the rotatable coupling is obtained through a pin 22 which can be snap-coupled in a hole 23, such elements being obtained on the cap element 11 and on the selector element 16.

Advantageously, means are provided for firmly maintaining the selector element 16 with respect to the cap element 11 in the positions of non-distribution, of lesser distribution and greater distribution.

For example these means for firmly maintaining the selector element 16 with respect to the cap element 11 comprise protruding elements 19, such as pegs, obtained inside the selector element 16 releasably couplable to seats 20 obtained outside the cap element 11 in centreline position between the areas 12, 13, 14, 15 of the cap 11 itself.

In order to rotatably act on the selector proper manual movement means 24 such as radial ribs 24 are provided obtained outside the selector 16.

Preferably the cap 11 comprises a lesser distribution area 12, an intermediate distribution area 13, a greater distribution area 14 and a non-distribution area 15.

The non-distribution area 15 is without openings, the intermediate distribution area 13 and the lesser distribution area 12 are provided with a plurality of openings with a greater 25 and smaller 26 sections, respectively.

The greater distribution area 14 is provided with a slit 27 substantially coinciding with the slit 17 of the selector 16.

Obviously instead of the aforementioned openings net elements with different mesh or other elements capable of differentiating the amount of product to be dispensed may be provided.

It has thus been observed that a selective distributing device provided with a warranty seal according to the present invention attains the previously outlined objects.

In fact the seal of the present invention does not require to be disposed and the device may be obtained in a single piece by moulding.

The selective distributing device provided with a warranty seal of the present invention thus conceived can be subjected to numerous modifications and variants, all falling within the same inventive concept; in addition, all details can be replaced by technically equivalent elements. In practice, the materials used, as well as their dimensions, may vary according to the technical requirements.

## Claims

1. A selective distributing device (10) of a substance contained in a container (30) of the type that is selectively commutable from a first non-distribution configuration, a second lesser distribution configuration and at least one third greater distribution configuration; said selective dispensing device (10) being of the type comprising:
- a cap element (11) that is associable with a container (30) and provided with a lesser distribution area (12), at least one greater distribution area (13, 14) and a non-distribution area (15),
- a selector element (16) provided with a slit (17) and movably constrained above said cap element (11) between a non-distribution position, in which said slit (17) is superimposed with respect to said non-distribution area (15), a lesser distribution position, in which said slit (17) is superimposed with respect to said lesser distribution area (12) and at least one greater distribution position in which said slit (17) is superimposed with respect to at least one greater distribution area (13, 14), and
- a warranty seal (18) for preventing distribution before the first distribution;
**characterized in that** said warranty seal (18) is of the breakable type and configured so as to block said selector (16) in said non-distribution position with respect to said cap (11) when intact and remain integral with said cap element (11) or with said selector element (16) when broken, to allow the movement of said selector element (16).

2. The selective distributing device (10) according to claim 1, **characterized in that** said warranty seal (18) is in the form of at least one breakable connecting bridge element between said cap element (11) and said selector element (16).

3. The selective distributing device (10) according to claim 2, **characterized in that** said bridge element (18) is directly connected on one side to the border of said selector element (16) and on the other side, breakably connected to an annular protrusion (21) obtained laterally to said cap element (11).

4. The selective distributing device (10) according to any of the previous claims, **characterized in that** when said bridge element (18) is broken, said selector element (16) is movable in a rotating manner with respect to said cap element (11).

5. The selective distributing device (10) according to claim 4, **characterized in that** said rotatable coupling is effected by means of a pin (22) which can be snap-coupled in a hole (23) obtained on said cap element (11) and on said selector element (16).

6. The selective distributing device (10) according to any of the previous claims, **characterized in that** it comprises means for firmly maintaining said selector element (16) with respect to said cap element (11) in said non-distribution, lesser-distribution and greater-distribution positions.

7. The selective distributing device (10) according to claim 6, **characterized in that** said means for firmly maintaining said selector element (16) with respect to said cap element (11) in said positions comprise protruding elements (19) obtained inside said selector element (16) which can be releasably coupled to seats (20) obtained outside said cap element (11) in a central position between said areas (12, 13, 14, 15).

8. The selective distributing device (10) according to any of the previous claims, **characterized in that** it comprises manual movement means (24) for moving said selector (16).

9. The selective distributing device (10) according to claim 6, **characterized in that** said manual movement means (24) for moving said selector (16) comprise radial ribs (24) obtained outside said selector (16).

10. The selective distributing device (10) according to any of the previous claims, **characterized in that** it comprises a lesser distribution area (12), an intermediate distribution area (13), a greater distribution area (14) and a non-distribution area (15); said non-distribution area (15) being deprived of openings, said intermediate distribution area (13) and said lesser distribution area (12) being provided with a plurality of openings with a larger (25) or smaller (26) section respectively, said greater distribution area (14) being provided with a slit (27) having a larger section than said openings (25, 26) substantially coinciding with said slit (17) of said selector (16).
